# EUROPEAN PATENT APPLICATION

(11) **EP 3 473 145 A1**
(43) Date of publication of application: **24.04.2019**
(21) Application number: 16905210.7
(22) Date of filing: 05.08.2016
(51) Int. Cl.: A47J 31/00

(54) **COFFEE MAKER**

(30) Priority: 17.06.2016 CN 201610445709
(71) Applicant: Elec-tech International Co., Ltd., Zhuhai, Guangdong 519000 (CN)
(72) Inventor: WANG, Donglei, Zhuihai Guangdong 519000 (CN); LI, Yong, Zhuihai Guangdong 519000 (CN); ZANG, Xinsheng, Zhuihai Guangdong 519000 (CN)
(74) Representative: Corradini, Corrado
(86) International application number: PCT/CN2016/093655
(87) International publication number: WO 2017/215097

(57) **Abstract**

Disclosed is a coffee maker. A water-vapor preparation system (S1) drives a stirring system (S2) with steam and/or conveys steam or hot water to a brewing system (S0); the stirring system (S2) stirs foaming liquid to foam under the driving of the steam; a foaming and heating system (S3) receives the steam or hot water condensed from the steam after the stirring system (S2) is driven by the water-vapor preparation system with steam, and heats the foaming liquid being stirred; a brewing system (S0) receives the steam or the hot water conveyed by the water-vapor preparation system (S1) to brew or soak coffee powder therein to prepare coffee; and a control system (S4) is in signal connection with and controls one or more of the water-vapor preparation system (S1), the stirring system (S2), the foaming and heating system (S3), and the brewing system (S0). According to the above-described coffee maker, the steam can be simultaneously used for stirring, foaming and heating. By means of stirring to foam, the foaming liquid generates a large amount of foam, and the foam is sufficient and fine, thereby no motor is needed to drive the stirring system, which results in low cost and low operating power consumption of the coffee maker.

## Description

### CROSS-REFERENCE TO RELATED APPLICATIONS

This application claims the priority of Chinese Patent Application No. 201610445709.1, filed on June 17, 2016, entitled "COFFEE MAKER", the disclosure of which is hereby incorporated by reference in its entirety.

### FIELD OF TECHNOLOGY

This application relates to the field of a beverage preparation apparatus, in particular to a coffee maker.

### BACKGROUND OF TECHNOLOGY

At present, there are two kinds of techniques for automatically foaming liquid and synchronously heating foaming liquid in a coffee maker. The first kind of technique is to foam and heat the foaming liquid by steam passing through a venturi. The device has simple structure and low cost, but the disadvantages are also significant, mainly in that the foam is insufficient, not fine, and easy to dissipate, the temperature of the foaming liquid is difficult to control, and it is not suitable for foaming a large amount of foaming liquid. The second kind of technique is to foam liquid by driving a stirring shaft using a motor, while the foaming liquid is heated by using an additional heating element. This apparatus has a good foaming effect, but additionally requires a motor, a heating element, and a control system, which results in high cost and large power consumption.

### SUMMARY

In view of this situation, it is necessary to provide a coffee maker to solve the following problems: the foam is insufficient, not fine, easy to dissipate, the temperature is difficult to control, and it is not suitable for foaming a large amount of foaming liquid when the foaming liquid is foamed and heated by the steam passing through a venturi, and the cost is high and the power consumption is large when heating the foaming liquid with a heating element in cooperation with mechanically stirring the foaming liquid.

The invention provides a coffee maker including a brewing system, a water-vapor preparation system, a stirring system, a foaming and heating system and a control system;
the water-vapor preparation system is configured to drive the stirring system with steam and/or conveys the steam or hot water to the brewing system;
the stirring system is configured to stir foaming liquid to foam under driving of the steam;
the foaming and heating system is configured to receive the steam or the hot water condensed from the steam after the stirring system is driven with steam by the water-vapor preparation system, and to heat the foaming liquid in the stirring system;
the brewing system is configured to receive the steam or the hot water conveyed by the water-vapor preparation system to brew or soak coffee powder therein to prepare coffee;
the control system is in signal connection with and is configured to control one or more of the water-vapor preparation system, the stirring system, the foaming and heating system, and the brewing system.

In an embodiment, the water-vapor preparation system includes a heating unit and a first valve;
the heating unit includes a first heat generating component, a first temperature control component, a water storage component, and a first conduit;
the first heat generating component is disposed inside or outside the water storage component and is in signal connection with the control system, and the first heat generating component is configured to directly heat water in the water storage component or indirectly heat the water in the water storage component by heating the water storage component under the control of the control system, so as to increase the temperature of the water or vaporize the water in the water storage component;
the first temperature control component is disposed inside or outside the water storage component and is in signal connection with the control system, and the first temperature control component is configured to measure temperature inside or outside an inlet of the water storage component and transmit a temperature signal to the control system;
the water storage component is provided with a water storage component inlet and a water storage component outlet, and the water storage component outlet is in communication with an inlet of a first valve through the first conduit;
two outlets of the first valve are further in communication with a third conduit and a fourth conduit, respectively, wherein the third conduit is in communication with the stirring system, and the fourth conduit is in communication with the brewing system.

In an embodiment, the heat generating component includes more than one heat generating members disposed at different positions.

In an embodiment, the heating unit includes a second heat generating component and a second temperature control component;
the second heat generating component is disposed on the first conduit or the third conduit, and the second temperature control component is installed adjacent to the second heat generating component;
the second heat generating component and the second temperature control component are in signal communication with the control system.

In an embodiment, a safety valve is disposed on the water storage component outlet or the first conduit.

In an embodiment, the water storage component includes any one of a conduit body, a tank body, or a box water storage tank.

In an embodiment, the first valve includes one of an electronic valve, or a mechanical valve, and is in signal connection with the control system.

In an embodiment, the heating unit includes a water supply unit;
the water supply unit includes a second conduit and a water source, and the second conduit introduces cold water of the water source to the water storage component.

In an embodiment, the water source includes a water tank or a water supply pipe.

In an embodiment, a water pump or a second valve is mounted on the second conduit, and the water pump or the second valve is in signal connection with the control system.

In an embodiment, the stirring system includes a substrate unit, an end cap unit, a stirring unit, and a stirring cup;
the end cap unit is connected with the substrate unit to form a first cavity;
the stirring cup is connected with the substrate unit to form a second cavity;
the stirring unit includes a rotating shaft, an impeller assembly and a stirring head, the impeller assembly and the stirring head being respectively connected with two ends of the rotating shaft;
the impeller assembly is located in the first cavity, the stirring head is located in the second cavity, and the substrate unit is provided with a first through hole for accommodating the rotating shaft to penetrate the substrate unit;
the first cavity is provided with a first cavity inlet or the first cavity is provided with the first cavity inlet and a first cavity outlet, and the first cavity inlet is connected with the water-vapor preparation system and introduces the steam to the impeller assembly.

In an embodiment, the impeller assembly is rigidly connected or integrally formed with the rotating shaft, and the stirring head is rigidly connected or integrally formed with the rotating shaft.

In an embodiment, the impeller assembly includes an axle and a blade disposed on the axle, the axle is provided with one or more blades that are oppositely disposed relative to a centerline of a pressurized steam outlet.

In an embodiment, the blade has a concave surface.

In an embodiment, the axle is provided with more than one blades having the same shape and/or weight.

In an embodiment, the stirring head includes a stirring head body and one or more of a sheet component, a mesh component, a wire component or an annular component disposed on the stirring head body.

In an embodiment, the substrate unit is provided with a diversion wall around the impeller assembly.

In an embodiment, the first through hole is provided with a bearing assembly.

In an embodiment, the stirring system includes a first sealing unit disposed at a position where the substrate unit is in contact with the end cap unit.

In an embodiment, the stirring system includes a second sealing unit disposed at a position where the substrate unit is in contact with the stirring cup.

In an embodiment, the stirring cup is connected with the substrate unit in a detachable or non-detachable manner including unit insertion, snapping, threading or clamp connection.

In an embodiment, the stirring system includes a pressurizing unit;
the pressurizing unit includes a hollow cone that is in communication with the water-vapor preparation system through the third conduit, and the hollow cone is in communication with the first cavity through the first cavity inlet;
an end of the hollow cone in connection with the third conduit forms a steam inlet;
an end of the hollow cone in connection with the first cavity inlet forms a pressurized steam outlet;
the cross-sectional area of the steam inlet is greater than that of the pressurized steam outlet.

In an embodiment, the pressurized steam outlet has a cross-sectional area of less than 0.8 mm².

In an embodiment, the foaming and heating system includes a cup holder that can accommodate partial or a whole of the stirring cup;
a third cavity is formed between the cup holder and the stirring cup or between the cup holder and the substrate unit, or the cup holder has a structure including the third cavity;
the third cavity is provided with a third cavity inlet or the third cavity is provided with the third cavity inlet and a third cavity outlet, and the third cavity inlet is connected with the first cavity outlet.

In an embodiment, the third cavity inlet is connected with the first cavity outlet through a fifth conduit, and a third valve is provided on the first cavity outlet or the fifth conduit.

In an embodiment, the foaming and heating system includes a cup holder that can accommodate a whole of the stirring cup, and a third cavity is formed between the cup holder and the substrate unit;
the substrate unit is provided with a liquid steam through hole, so that the steam or the hot water in the first cavity enters the third cavity.

In an embodiment, the foaming and heating system includes a third sealing unit which is disposed at a position where the cup holder contacts with the stirring cup or the cup holder contacts with the substrate unit.

In an embodiment, the foaming and heating system includes a heating tube body, one end of the heating tube body is connected with the first cavity outlet or the third valve, or the substrate unit is provided with a second through hole, and the one end of the heating tube body is in communication with the first cavity through the second through hole;
the heating tube body is closed or opened at an end away from the first cavity.

In an embodiment, an end of the heating tube body away from the first cavity is annular.

In an embodiment, the foaming and heating system includes a third temperature control component disposed in the second cavity or in the third cavity; and the third temperature control component is in signal connection with the control system.

According to the above-described coffee maker, the steam generated by the water-vapor preparation system can be used for stirring, foaming and heating simultaneously. The stirring and foaming can cause the foaming liquid to generate a large amount of foam, and the foam is sufficient and fine. Since the water-vapor preparation system is used for stirring, foaming and heating, no motor is needed to drive the stirring system, which results in low cost and low operating power consumption of the coffee maker.

According to the above-described coffee maker, the control system can control circulation and flow of the steam through the solenoid valve, with a high controllability.

According to the above-described coffee maker, the control system can control the temperature of the steam generated by the steam generating unit or the heating temperature of the foaming and heating system through the first temperature control component or the second temperature control component, with a simple control having a high controllability.

### DESCRIPTION OF THE DRAWINGS

In order to more clearly illustrate the embodiments of the present application or the technical solutions in the prior art, the figures used for the embodiments will be briefly described below. It is obvious that the figures in the following description illustrate merely some embodiments recorded in the present invention, and other figures can also be obtained by those skilled in the art from these figures.
Figure 1 is a schematic view showing the structure of a coffee maker according to the present invention.
Figure 2 is a schematic view showing the structure of a water-vapor preparation system of the coffee maker shown in Figure 1.
Figure 3 is a schematic view showing the structure of a stirring system of the coffee maker shown in Figure 1.
Figure 4 is a schematic view showing the position of an impeller assembly of the coffee maker shown in Figure 1.
Figure 5 is a schematic view showing the structure of the impeller assembly of the coffee maker shown in Figure 1.
Figure 6 is a schematic view showing the structure of a stirring head of the coffee maker shown in Figure 1.
Figure 7 is a schematic view showing the structure of a foaming and heating system of the coffee maker shown in Figure 1.
Figure 8 is a schematic view showing the structure of a brewing system of the coffee maker shown in Figure 1.
Figure 9 is a schematic view showing the connection of a control system of the coffee maker shown in Figure 1.
Figure 10 is a schematic view showing another preferred structure of the water-vapor preparation system of the coffee maker according to the present invention.
Figure 11 is a schematic view showing another preferred structure of the foaming and heating system of the coffee maker according to the present invention.

Wherein, SO-brewing system; 0100-brewing holder; 0110-filter cup; 0120-filter sheet; 0130-pressure limiting valve; 0200-brewing cover; 0210-flow control valve; S1-water-vapor preparation system; 1100-heating unit; 1110-first heat generating component; 1111-first heat generating member; 1122-second heat generating component; 1120-first temperature control component; 1130-water storage component; 1140-first conduit; 1150-second heat generating component; 1160-second temperature control component; 1200-water supply unit; 1210-second conduit; 1220-water tank; 1230-water pump; 1300-first valve; 1310-third conduit; 1320-fourth conduit; S2-stirring system; 2100-substrate unit; 2110-diversion wall; 2200-end cap unit; 2300-stirring unit; 2310-rotating shaft; 2320-impeller assembly; 2231-axle; 2322-blade; 2330-stirring head; 2331-stirring head body; 2332-sheet component; 2333-annular component; 2400-stirring cup; 2500-pressurizing unit; 2600-first sealing unit; S3-foaming and heating system; 3100-cup holder; 3110-third sealing unit; 3120-fifth conduit; 3200-heating tube body; S4-control system; Q0-brewing cavity; Q1-first cavity; Q2-second cavity; Q3-third cavity; A1-water storage component inlet; A2-water storage component outlet; A3-steam inlet; A4-pressurized steam outlet; A5-first cavity inlet; A6-first cavity outlet; A7-third cavity inlet; A8-third cavity outlet; A9-brewing cavity inlet; A10-brewing cavity outlet.

### DETAILED DESCRIPTION OF EMBODIMENTS

In order to make the technical solutions of the present invention clearer, the present invention will be further described in detail below with reference to accompanying drawings and specific embodiments.

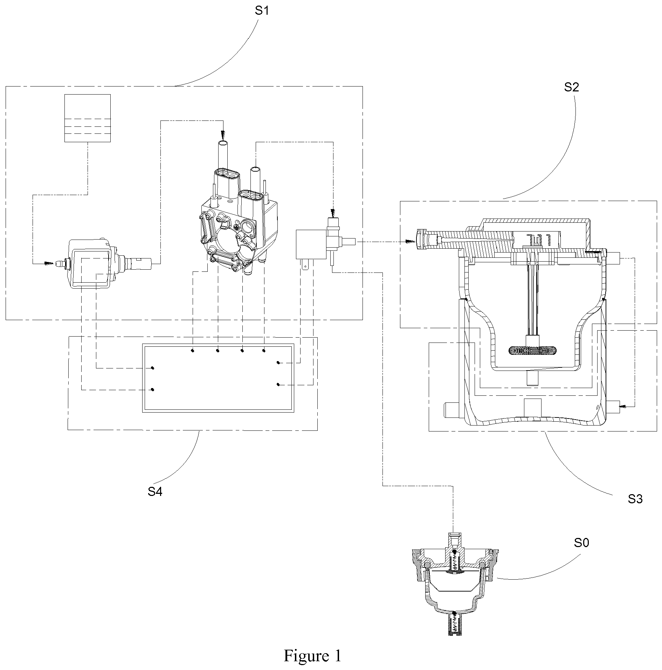

Referring to Figure 1, the coffee maker of the present invention includes a brewing system S0, a water-vapor preparation system S1, a stirring system S2, a foaming and heating system S3, and a control system S4. The water-vapor preparation system S1 can prepare steam or hot water, the water-vapor preparation system S1 can convey the prepared steam to the stirring system S2, so as to drive the stirring system S2 to stir the foaming liquid to foam, and the water-vapor preparation system S1 can also convey the prepared steam or hot water to the brewing system S0 to prepare coffee. The foaming and heating system S3 receives the low-pressure steam or hot water condensed from the steam after the stirring system S2 is driven by the water-vapor preparation system S1 with steam, and heats the foaming liquid. The control system S4 is in signal connection with and controls the water-vapor preparation system S1.

In other embodiments, the control system S4 can be in signal connection with one or more of the brewing system S0, the stirring system S2 and the foaming system S3, respectively and controls the operating states of each system.

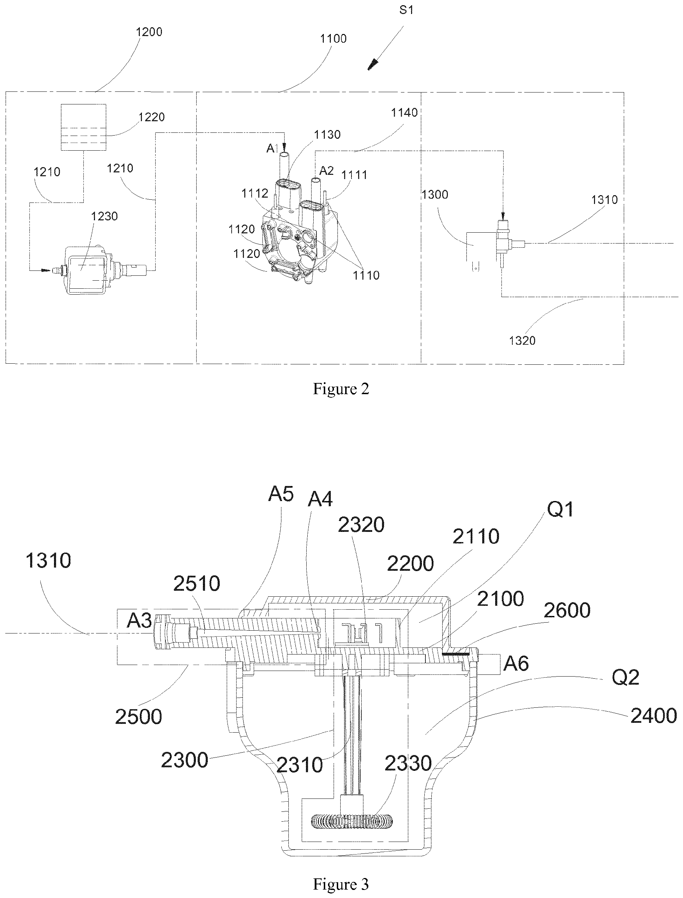

Referring to figure 2, the water-vapor preparation system S1 includes a heating unit 1100, a water supply unit 1200, and a first valve 1300. The heating unit 1100 is in communication with the first valve 1300 through the first conduit 1140, and the water supply unit 1200 is in communication with the heating unit 1100 through the second conduit 1210.

A first heat generating component 1110, a first temperature control component 1120 and a water storage component 1130 of the heating unit 1100 are collectively disposed in one housing. Cold water supplied from the water supply unit 1200 through the second conduit 1210 enters the water storage component 1130 through a water storage component inlet A1, and is heated to steam or hot water by the first heat generating component 1110 in the water storage component 1130. The steam or the hot water enters into the first conduit 1140 through the water storage component outlet A2 and is introduced into the first valve 1300 through the first conduit 1140.

A first heat generating member 1111 and a second heat generating member 1112 of the first heat generating component 1110 are disposed adjacent to the exterior of the water storage component 1130, respectively, and heat the water in the water storage component 1130 to make the water become hot water or steam having a certain temperature.

In other embodiments, the first heat generating component 1110 may be a single heat generating member or include a plurality of heat generating members. The first heat generating component 1110 may also be disposed inside the water storage component 1130 to directly heat the water therein to make the water become hot water or steam having a certain temperature.

The first temperature control component 1120 is disposed immediately adjacent to the exterior of the water storage component 1130, and measures the temperature of the water storage component 1130.

In other embodiments, the first temperature control component 1120 may also be disposed inside the water storage component 1130 to directly measure the temperature of the water storage component 1130.

A water tank 1220 of the water supply unit 1200 is in communication with the water storage component inlet A1 through the second conduit 1210, a water pump 1230 is disposed on the second conduit 1210, and the water pump 1230 pumps the water in the water tank 1220 into the water storage component 1130 at a certain flow rate.

In other embodiments, the water supply unit 1200 can connect the heating unit 1100 with a conventional water supply pipe directly through the second conduit 1210. Preferably, a second valve is disposed on the second conduit 1210, and the second valve can control the water to flow into the water storage component 1130 at a certain flow rate. The second valve may be an electronic valve or a mechanical valve.

The first valve 1300 is disposed at an end of the first conduit 1140 away from the water storage component outlet A2. The first valve 1300 is an electronic three-way valve, and the first valve 1300 is in communication with the stirring system S2 through a third conduit 1310 and in communication with the brewing system S0 through a fourth conduit 1320 respectively. The first valve 1300 can control the steam or the hot water generated through heating by the heating unit 1100 to enter the brewing system S0 and/or the stirring system S2 at a certain flow rate. In other embodiments, the first valve 1300 may also be a mechanical valve.

Referring to Figure 3, the stirring system S2 includes a substrate unit 2100, an end cap unit 2200, a stirring unit 2300, a stirring cup 2400, a pressurizing unit 2500, and a first sealing unit 2600. The substrate unit 2100 is covered with the end cap unit 2200 at its top to form a closed first cavity Q1. The first cavity Q1 is provided with a first cavity inlet A5 and a first cavity outlet A6 on the end cap unit 2200, which can prevent the steam from leaking and isolate operating noise. The first sealing unit 2600 is disposed at a position where the substrate unit 2100 is in contact with the end cap unit 2200, so that the first cavity Q1 forms a sealed space and better isolates noise. The substrate unit 2100 is provided with a stirring cup 2400 at its bottom and forms a closed second cavity Q2 with the stirring cup 2400, and the closed second cavity Q2 is used for accommodating the foaming liquid and isolating the operating noise.

An impeller assembly 2320 of the stirring unit 2300 is disposed in the first cavity Q1, and the stirring head 2330 is disposed in the second cavity Q2. A rotating shaft 2310 connects the impeller assembly 2320 and the stirring head 2330 by passing through the first through hole on the substrate unit 2100. The impeller assembly 2320, the stirring head 2330, and the rotating shaft 2310 are rigidly connected.

The pressurizing unit 2500 contains a hollow cone 2510, and the two ends of the hollow cone 2510 are respectively opened, wherein one end in communication with the third conduit 1310 is a steam inlet A3, and one end in communication with the first cavity inlet A5 is a pressurized steam outlet A4. The steam inlet A3, the pressurized steam outlet A4, and the first cavity inlet A5 are in the same straight line. The cross-sectional area of the steam inlet A3 is larger than that of the pressurized steam outlet A4, and the pressurized steam outlet A4 is a small circular hole having a diameter of less than 1.0 mm. The pressurizing unit 1200 increases the steam pressure, speeds up the steam flow rate, and improves the pushing action of the stirring unit 2300 by setting the cross-sectional area of the pressurized steam outlet A4 to be smaller than that of the steam inlet A3.

Preferably, a second sealing unit is disposed at a position where the substrate unit 2100 is in contact with the stirring cup 2400, so that the second cavity Q2 forms a closed space and better isolates noise.

Preferably, the substrate unit 2100 is connected with the stirring cup 2400 in a detachable manner, such as insertion, snapping, threading or clamp connection.

Preferably, the first through hole is mounted with a bearing assembly to bear the rotating shaft 2310.

Preferably, the substrate unit 2100 is provided with a speed control component for controlling the rotation speed of the stirring unit 2300.

In other embodiments, the substrate unit 2100 and the stirring cup 2400 may alternatively be integrally formed in a non-detachable manner, wherein, the stirring cup 2400 or the substrate unit 2100 should be provided with an opening for the foaming liquid to enter and exit.

In other embodiments, partial or a whole of the impeller assembly 2320, the stirring head 2330, and the rotating shaft 2310 can be integrally formed on the rotating shaft 2310.

In other embodiments, the pressurized steam outlet A4 may have other shapes, such as a triangle or a polygon. Preferably, the cross-sectional area of the steam inlet A3 is much larger than the cross-sectional area of the pressure outlet. Preferably, the cross-sectional area of the pressurized steam outlet A4 is less than 0.8 mm².

In other embodiments, the pressurizing unit 1200 can alternatively be other devices that increase steam pressure or flow rate, such as a pressurized pump or a structure similar to a venturi.

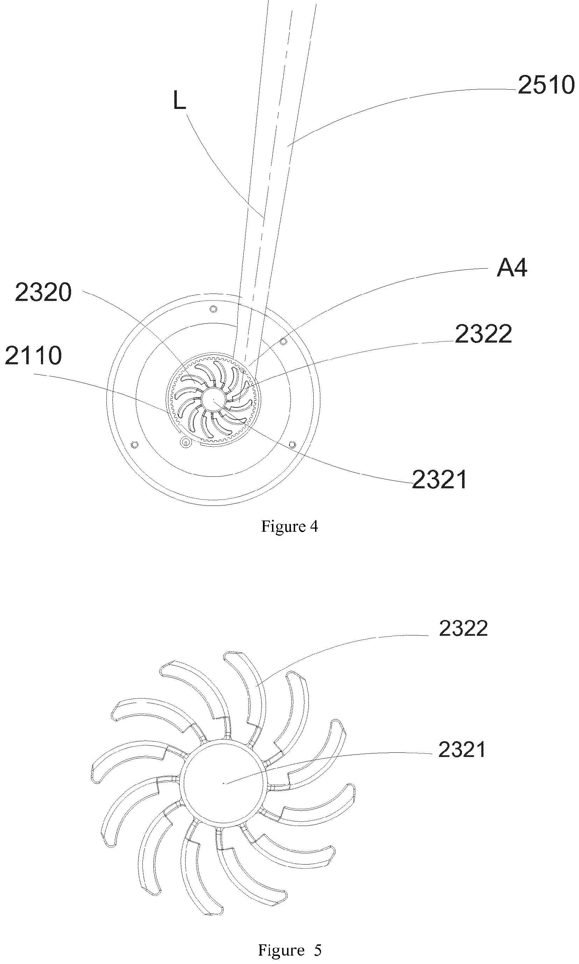

Referring to Figure 3 and Figure 4, the substrate unit 2100 is provided with a diversion wall 2110 around the impeller assembly 2320. The diversion wall 2110 is provided with two openings, and the pressurized steam outlet A4 is connected to one of the openings. The diversion wall 2110 guides the direction of steam flow from the pressurized steam outlet A4 to better drive the impeller assembly to rotate.

Referring to Figure 4 and Figure 5, an axle 2321 of the impeller assembly 2320 has a plurality of blades 2322 having the same shape. The blades 2322 are evenly distributed on the axle 2321. The axle 2321 is disposed near a straight line L where the pressurized steam outlet A4 and the first cavity inlet A5 are located, the center of a certain blade 2322 is on the line L where the pressurized steam outlet A4 and the first chamber inlet A5 are located, so that the steam impulse on the blade 2322 can be made as large as possible to push the stirring unit to stir the foaming liquid. The blade 2322 has a concave surface on its one side to allow the steam to better push the impeller assembly 2320 to rotate.

In other embodiments, the blades 2322 can have different shapes and can be disposed at different locations of the axle 2321, such as the upper portion and the lower portion of the axle 2321 in which the blades 2322 are staggered.

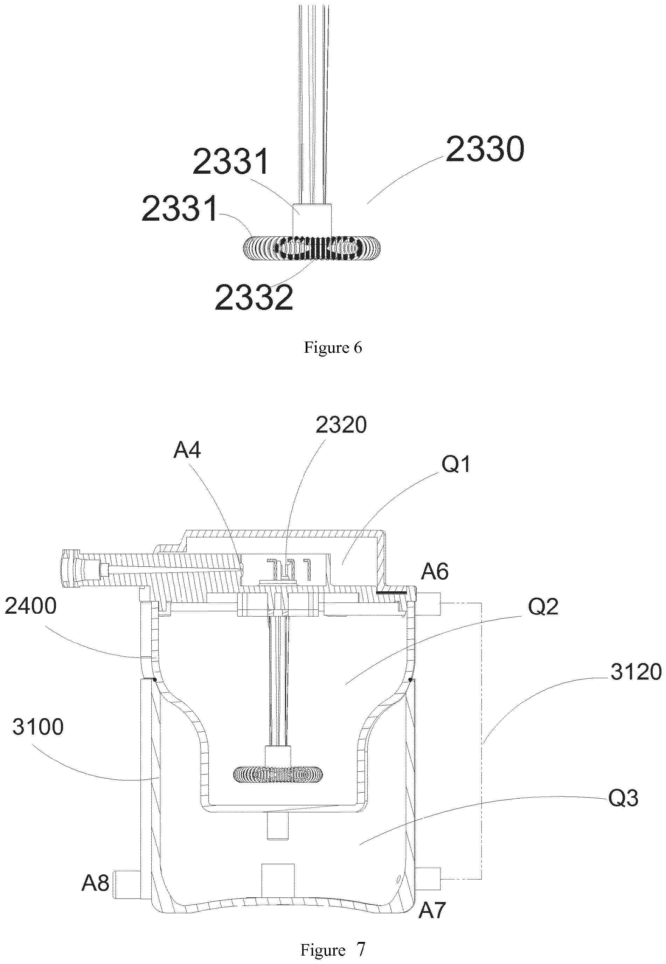

Referring to Figure 6, the stirring head body 2331 of the stirring head 2330 is provided with a sheet component 2332 and an annular component 2333 surrounding the sheet component 2332. The stirring head 2330 can make the foaming liquid to foam uniformly and quickly in a more sufficient manner.

In other embodiments, the stirring head body 2331 may be provided with separately disposed sheet component 2332, mesh component, annular component 2333 and linear component, or may adopt other conventional stirring heads 2330.

Referring to Figure 7, the cup holder 3100 of the foaming and heating system S3 can accommodate a part of the stirring cup body 2400. The cup holder 3100 is a container with one end open and the stirring cup body 2400 can be placed at the opening thereof, and the cup holder 3100 and the stirring cup body 2400 form a third cavity Q3. A third cavity inlet A7 and a third cavity outlet A8 are disposed on a wall of the cup holder 3100, the third cavity inlet A7 and the first cavity outlet A6 are connected through the fifth conduit 3120, and the low pressure steam or the condensed hot water in the first cavity Q1 is introduced into the third cavity Q3 to heat the foamed liquid accommodated in the second cavity Q2 by using the low pressure steam or the condensed hot water. The third cavity outlet A8 can discharge the excess steam or hot water therein from the third chamber Q3.

In other embodiments, the first cavity outlet A6 or the fifth conduit 3120 is provided with a third valve, and the third valve can control the flow rate of the low pressure steam or the hot water flowing from the first cavity Q1 into the third cavity Q3, thereby controlling the heating temperature and/or the heating rate at which the foaming liquid is heated.

In other embodiments, the third cavity outlet A8 is provided with a fourth valve that controls the flow rate of the third cavity outlet A8 to discharge the excess steam or hot water in the third chamber Q3.

In other embodiments, the first cavity outlet A6 may be not in communication with the fifth conduit 3120, so that the excess steam or condensed hot water of the first cavity Q1 may be discharged from the first cavity Q1 through the first cavity outlet A6, thereby avoiding the too large steam pressure in the first cavity Q1 and preventing the condensed hot water accommodated in the first cavity Q1 from affecting the pushing action of the pressurized steam ejected from the pressurized steam outlet A4 on the impeller assembly 2320.

In other embodiments, the cup holder 3100 can be a container having an opening at one end, which can accommodate a whole of the stirring cup 2400. The opening directly contacts with the substrate unit 2100 to form a third cavity Q3, and the first cavity outlet A6 can be directly located in the third cavity, thus there is no need to separately provide a third cavity inlet A7 in the third cavity Q3.

In other embodiments, a third sealing unit is disposed at a position where the cup holder 3100 contacts with the stirring cup 2400 or where the cup holder 3100 contacts with the substrate unit 2100, so that the third cavity Q3 forms a closed space to prevent the steam or the hot water from leaking.

In other embodiments, the cup holder 3100 can be a box which is provided with a third cavity inlet A7 and a third cavity outlet A8 and forms therein a third chamber Q3 for accommodating the steam or the hot water introduced from the first cavity Q1. A groove for accommodating partial or whole of the stirring cup 2400 is provided at one end of the box, and the groove can be adhered to an outer wall of the stirring cup 2400 to heat the foaming liquid in the stirring cup 2400 by using the steam or the hot water accommodated in the third cavity Q3 of the box.

In other embodiments, a third temperature control component is disposed within the second cavity Q2 and is configured to measure the temperature of the foaming liquid accommodated in the second cavity Q2. Preferably, the third temperature control component is disposed on the substrate unit 2100.

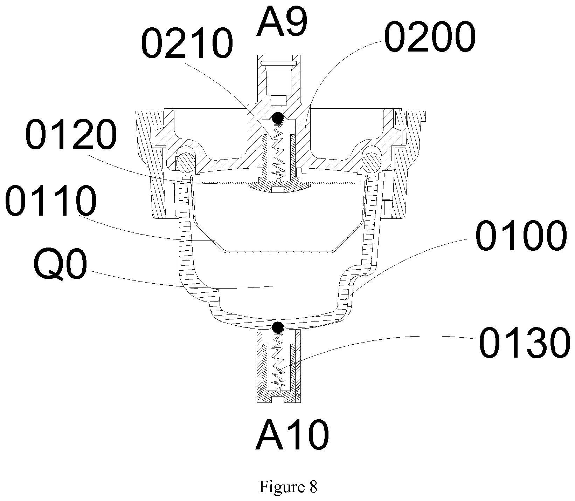

Referring to Figure 8, the brewing system S0 includes a brewing holder 0100 and a brewing cover 0200. The brewing holder 0100 and the brewing cover 0200 are snapped to form a brewing cavity Q0, a filter cup 0110 is installed in the brewing cavity Q0, and a filter sheet 0120 is installed at an upper end of the filter cup 0100.

The brewing cover 0200 is provided with a brewing cavity inlet A9. The brewing cavity inlet A9 is in communication with the water-vapor preparation system S1 through the fourth conduit 1320, and the hot water or the steam prepared by the water-vapor preparation system S1 is introduced into the brewing cavity Q0 to brew coffee. The brewing holder 0100 is provided with a brewing cavity outlet A10, and the brewing cavity outlet A10 discharges the brewed coffee from the brewing chamber Q0 for drinking. A flow control valve 0210 is provided at the brew cavity inlet A9, and a pressure limited valve 0230 is provided at the brewing cavity outlet A10.

In other embodiments, the brewing system S0 can alternatively employ other conventional brewing configurations.

In other embodiments, a seal is provided at a position where the brewing holder 0100 contacts with the brewing cover 0200 to better seal the brewing cavity Q0.

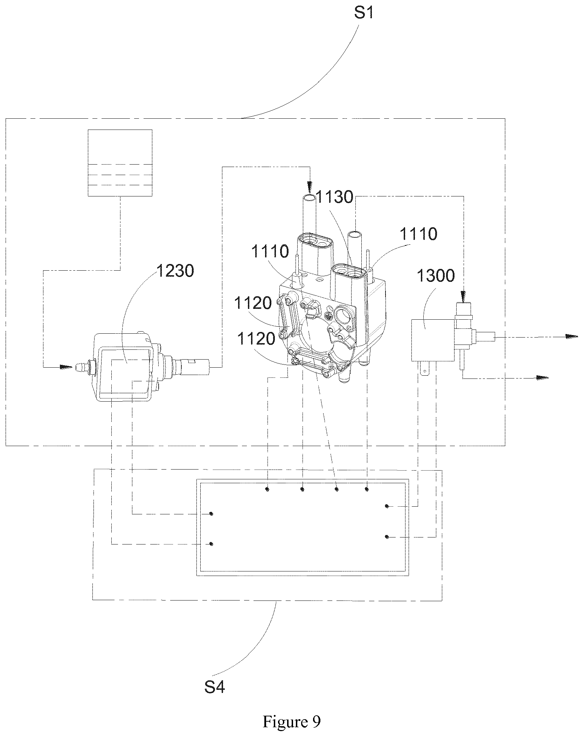

Referring to Figure 9, the control system S4 is respectively connected with the water pump 1230, the first heat generating component 1110, and the first temperature control component 1120. The control system S4 can control the flow rate of the water flowing into the water storage component 1130 by controlling the water pump 1230. The control system S4 can control the degree of heat generation of the first heat generating component 1110 according to the temperature measured by the first temperature control component 1120, and can further regulate the temperature of the hot water or the amount and the temperature of the steam generated by the water-vapor preparation system S1. The control system S4 is in signal connection with the first valve such that the flow rate of the steam or the hot water entering the third conduit and/or the fourth conduit through the first valve can be regulated.

In other embodiments, the control system S4 can also be in signal connection with the second heat generating component and the second temperature control component in the water-vapor preparation system S1, so that the heating rate and the heating temperature of the second heat generating component can be controlled according to the temperature information measured by the second temperature control component.

In other embodiments, the control system S4 can also be in signal communication with the stirring unit or the speed control component in the stirring system S2, so that the speed control component can be adjusted according to the rotation speed of the stirring unit, or the parameters such as the amount and the temperature of the steam prepared by the water-vapor preparation unit can be adjusted according to the rotation speed of the stirring unit.

In other embodiments, the control system can also be in signal communication with the third temperature control component, the third valve or the fourth valve in the foaming and heating system S3, so that the flow rate of the steam or the hot water entering the third cavity Q3 can be adjusted by the third valve, or the flow rate of the steam or the hot water discharging from the third cavity Q3 can be adjusted by the fourth valve, according to the temperature measured by the third temperature control component.

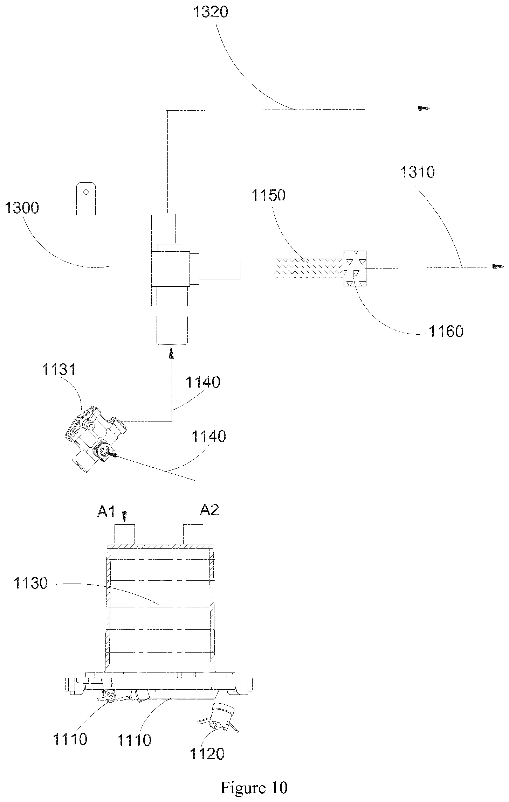

Referring to Figure 10, the water-vapor preparation system of this embodiment is different from that in Figure 3 in that the water storage component 1130 is a box water storage tank. The first heat generating component 1110 and the first temperature control component 1120 are installed at the bottom of the box water storage tank. The water storage component inlet A1 can be directly connected with the water supply pipe to supply water to the box water storage tank, and the safety valve 1131 is installed on the first conduit 1140 to prevent security issues caused by too large steam pressure in the water storage component 1130.

A second heat generating component 1150 and a second temperature control component 1160 are provided on the third conduit 1310 through which the first valve 1300 is connected with the stirring system S2, so as to further heat the steam or the hot water flowing through the third conduit 1320.

In other embodiments, the safety valve 1131 may also be provided on the water storage component outlet A2.

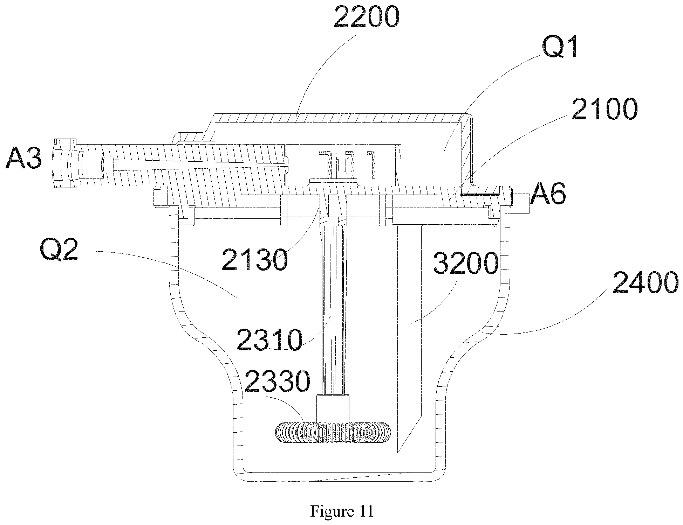

Referring to Figure 11, the foaming and heating system S3 in this embodiment is different from that in Figure 7 in that the foaming and heating system S3 is provided in the second cavity Q2. The foaming and heating system S3 includes a hollow heating tube body 3200. One end of the heating tube body 3200 is in communication with the first cavity Q1 through a second through hole disposed in the substrate unit 2100, and the heating tube body 3200 is opened at an end away from the first cavity Q1, so that the heating tube body 3200 can introduce the stream or the condensed hot water within the first cavity Q1 into the second cavity Q2, that is, into the stirring cup 2400, thereby heating the foaming liquid.

In other embodiments, one end of the heating tube body 3200 is connected with the first cavity outlet A6 to introduce the steam or the hot water within the first chamber Q1 into the second chamber Q2.

In other embodiments, one end of the heating tube body 3200 is connected with the first cavity outlet A6 through a hose. This embodiment allows the heating tube body 3200 to be used separately to heat liquid such as other beverages or the like.

In other embodiments, one end of the heating tube body 3200 away from the first cavity Q1 may have an annular structure to increase the contact area with the foaming liquid.

In other embodiments, one end of the heating tube body 3200 away from the first cavity Q1 may be opened in the form of a plurality of small holes.

In other embodiments, one end of the heating tube body 3200 away from the first cavity Q1 may be closed.

The coffee maker of the present invention can prepare coffee or foaming liquid separately or simultaneously.

When making coffee, the first valve 1300 turns on the heating unit 1100 and the brewing system S0, and introduces the steam or the hot water prepared by the heating unit 1100 into the brewing system S0 for making coffee. Specifically, coffee powder is added to the brewing system S0, the control system S4 is set as needed, and the coffee maker is activated. The water pump 1220 starts to pump cold water into the water storage component 1130 at a certain flow rate. The first heat generating part 1110 starts under the control of the control system S4 and heats the water within the water storage component 1130 to be the hot water or the steam having a certain temperature. The temperature of the water storage component 1130 is measured by the first temperature control component 1120 and signals are sent to the control system S4. The hot water or the steam flows into the brewing system S0 through the fourth conduit 1320 at a certain flow rate under the control of the first valve 1300, so as to make coffee.

When foaming liquid, the first valve 1300 turns on the heating unit 1100 and the stirring system S2, and the steam prepared by the heating unit 1100 pushes the stirring unit 2300 to stir the foaming liquid to foam. Specifically, an appropriate amount of the foaming liquid is added to the stirring cup 2400, the stirring cup 2400 is mounted on the substrate unit 2100, the amount of water in the water tank 1220 is checked, the control system S4 is set as needed and the apparatus is activated.

The water pump 1181 starts to pump the cold water into the water storage component 1130 at a certain flow rate. The first heat generating component 1110 starts under the control of the control system S4 and heats the water within the water storage component 1130 to be the steam having a certain temperature. The temperature of the water storage component 1130 is measured by the first temperature control component 1120 and signals are sent to the control system S4.

The steam prepared by the heating unit 1100 firstly enters the pressurizing unit 2500 through the third conduit 1310. Since the steam inlet A3 is larger than the pressurized steam outlet A4, the steam pressure ejected from the pressurized steam outlet A4 is increased, and the flow rate is correspondingly increased. The high-speed steam is injected onto the blades 2322 of the impeller assembly 2320 through the pressurized steam outlet A4, and the rotating shaft 2310 is driven to rotate and stir the foaming liquid. The first valve 1300 is closed under the control of the control system S4 after foaming is completed.

Preferably, the second heat generating component 1150 and the second temperature control component 1160 are mounted on the third conduit 1310. The second heat generating component 1150 cooperates with the second temperature control component 1160 to separately heat the steam conveyed to the pressurizing unit 2500 through the third conduit 1120, so as to further increasing the temperature of the steam.

The flow rate and the pressure of the pressurized steam injected to the impeller assembly 2320 is reduced so that the pressurized steam becomes the ordinary steam, and some or all of the steam is condensed into hot water. The steam or the hot water is introduced into the third cavity Q3 through the first cavity outlet A6 to heat the stirring cup 2400 and to indirectly heat the foaming liquid therein.

In other embodiments, the low pressure steam or the hot water may alternatively be introduced directly into the second cavity Q2 to heat the foaming liquid.

In other embodiments, the low pressure steam or the hot water is introduced into the third cavity Q3 or the second cavity Q2 under the control of the third valve, meanwhile the heating rate or heating temperature can be controlled by the control system S4.

In other embodiments, the steam or the hot water prepared by the heating unit 1100 can be controlled to enter the third conduit 1310 and the fourth conduit 1320 by controlling the first valve 1300, and the first valve 1300 can simultaneously control the flow rate of the hot water or the steam entering the third conduit 1310 and the four conduit 1320, so as to simultaneously prepare the coffee and the foaming liquid. In this case, the first heat generating component 1110 and the second heat generating component 1150 can be respectively controlled by the control system S4, so that the hot water or the steam heated by the first heat generating component 1110 is suitable for making coffee and is conveyed to the brewing system S0 through the fourth pipe 1320, and the hot water or the steam heated by the first heat generating component 1110 is further heated by the second heat generating component 1150 disposed in the third conduit 1320 and suitably drives the stirring system S2.

The above-described embodiments are merely several illustrative embodiments of the present invention and the description thereof is more specific and detailed, but these embodiments should not be understood as limits to the scope of the invention. It should be pointed out that several variations and modifications may be made by those skilled in the art without departing from the concepts of the invention, and the several variations and modifications belong to the protection scope of the invention. Therefore, the protection scope of the invention should be determined by the appended claims.

## Claims

1. A coffee maker, **characterized by** comprising a brewing system (S0), a water-vapor preparation system (S1), a stirring system (S2), a foaming and heating system (S3) and a control system (S4);
the water-vapor preparation system (S1) is configured to drive the stirring system (S2) with steam and/or convey the steam or hot water to the brewing system (S0);
the stirring system (S2) is configured to stir foaming liquid to foam under driving of the steam; the foaming and heating system (S3) is configured to receive the steam or the hot water condensed from the steam after the stirring system (S2) is driven with steam by the water-vapor preparation system (S1), and to heat the foaming liquid in the stirring system (S2);
the brewing system (S0) is configured to receive the steam or the hot water conveyed by the water-vapor preparation system (S1) to brew or soak coffee powder therein to prepare coffee; and
the control system (S4) is in signal connection with and is configured to control one or more of the water-vapor preparation system (S1), the stirring system (S2), the foaming and heating system (S3), and the brewing system (S0).

2. The coffee maker according to claim 1, **characterized in that**, the water-vapor preparation system (S1) includes a heating unit (1100) and a first valve (1300);
the heating unit (1100) includes a first heat generating component (1110), a first temperature control component (1120), a water storage component (1130), and a first conduit (1140);
the first heat generating component (1110) is disposed inside or outside the water storage component (1130) and is in signal connection with the control system (S4), and the first heat generating component (1110) is configured to directly heat water in the water storage component (1130) or indirectly heat the water in the water storage component (1130) by heating the water storage component (1130) under the control of the control system (S4), so as to increase the temperature of the water or vaporize the water in the water storage component (1130);
the first temperature control component (1120) is disposed inside or outside the water storage component (1130) and is in signal connection with the control system (S4), and the first temperature control component (1120) is configured to measure temperature inside or outside an inlet of the water storage component (1130) and transmit temperature signal to the control system (S4);
the water storage component (1130) is provided with a water storage component inlet (A1) and a water storage component outlet (A2), and the water storage component outlet (A2) is in communication with the first valve (1300) through the first conduit (1140); and
two outlets of the first valve (1300) are further in communication with a third conduit (1310) and a fourth conduit (1320), respectively, the third conduit (1310) is in communication with the stirring system (S2), and the fourth conduit (1320) is in communication with the brewing system (S0).

3. The coffee maker according to claim 2, **characterized in that**, the heat generating component includes more than one heat generating members disposed at different positions.

4. The coffee maker according to claim 2, **characterized in that**, the heating unit (1100) includes a second heat generating component (1150) and a second temperature control component (1160);
the second heat generating component (1150) is disposed on the first conduit (1140) or the third conduit (1310), and the second temperature control component is installed adjacent to the second heat generating component (1150); and
the second heat generating component (1150) and the second temperature control component (1160) are in signal communication with the control system (S4).

5. The coffee maker according to claim 2, **characterized in that**, a safety valve (1131) is disposed on the water storage component outlet (A2) or the first conduit (1140).

6. The coffee maker according to claim 2, **characterized in that**, the water storage component (1130) includes any one of a conduit body, a tank body, and a box water storage tank.

7. The coffee maker according to claim 2, **characterized in that**, the first valve (1300) includes one of an electronic valve and a mechanical valve, and is in signal connection with the control system (S4).

8. The coffee maker according to claim 2, **characterized in that**, the heating unit (1100) includes a water supply unit (1200);
the water supply unit (1200) includes a second conduit (1210) and a water source, and the second conduit (1210) introduces cold water of the water source to the water storage component (1130).

9. The coffee maker according to claim 8, **characterized in that**, the water source includes a water tank (1220) or a water supply pipe.

10. The coffee maker according to claim 8, **characterized in that**, a water pump (1230) or a second valve is mounted on the second conduit (1210), and the water pump (1230) or the second valve is in signal connection with the control system (S4).

11. The coffee maker according to any one of claims 1-10, **characterized in that**, the stirring system (S2) includes a substrate unit (2100), an end cap unit (2200), a stirring unit (2300), and a stirring cup (2400);
the end cap unit (2200) is connected with the substrate unit (2100) to form a first cavity (Q1); the stirring cup (2400) is connected with the substrate unit (2100) to form a second cavity (Q2);
the stirring unit (2300) includes a rotating shaft (2310), an impeller assembly (2320) and a stirring head (2330), the impeller assembly (2320) and the stirring head (2330) being respectively connected with two ends of the rotating shaft (2310);
the impeller assembly (2320) is located in the first cavity (Q1), the stirring head (2330) is located in the second cavity (Q2), and the substrate unit (2100) is provided with a first through hole for accommodating the rotating shaft (2310) to penetrate the substrate unit (2100); and
the first cavity (Q1) is provided with a first cavity inlet (A5) or the first cavity (Q1) is provided with the first cavity inlet (A5) and a first cavity outlet (A6), and the first cavity inlet (A5) is connected with the water-vapor preparation system (S1) and introduce the steam to the impeller assembly (2320).

12. The coffee maker according to claim 11, **characterized in that**, the impeller assembly (2320) is rigidly connected or integrally formed with the rotating shaft (2310), and the stirring head (2330) is rigidly connected or integrally formed with the rotating shaft (2310).

13. The coffee maker according to claim 11, **characterized in that**, the impeller assembly (2320) includes an axle (2321) and a blade (2322) disposed on the axle (2321), the axle (2321) is provided with one or more blades (2322) that are oppositely disposed relative to a centerline of a pressurized steam outlet (A4).

14. The coffee maker according to claim 13, **characterized in that**, the blade (2322) has a concave surface.

15. The coffee maker according to claim 13, **characterized in that**, the axle (2321) is provided with more than one blades (2322) having the same shape and/or weight.

16. The coffee maker according to claim 11, **characterized in that**, the stirring head (2330) includes a stirring head body (2331) and one or more of a sheet component (2332), a mesh component, a wire component or an annular component (2333) disposed on the stirring head body (2331).

17. The coffee maker according to claim 11, **characterized in that**, the substrate unit (2100) is provided with a diversion wall around the impeller assembly (2320).

18. The coffee maker according to claim 11, **characterized in that**, the first through hole is provided with a bearing assembly.

19. The coffee maker according to claim 11, **characterized in that**, the stirring system (S2) includes a first sealing unit (2600) disposed at a position where the substrate unit (2100) is in contact with the end cap unit (2200).

20. The coffee maker according to claim 11, **characterized in that**, the stirring system (S2) includes a second sealing unit disposed at a position where the substrate unit (2100) is in contact with the stirring cup (2400).

21. The coffee maker according to claim 11, **characterized in that**, the stirring cup (2400) is connected with the substrate unit in a detachable or non-detachable manner including unit insertion, snapping, threading or clamp connection.

22. The coffee maker according to claim 11, **characterized in that**, the stirring system (S2) includes a pressurizing unit;
the pressurizing unit contains a hollow cone (1210) that is in communication with the water-vapor preparation system through the third conduit (1310), and the hollow cone (1210) is in communication with the first cavity (Q1) through the first cavity inlet (A5);
an end of the hollow cone (1210) in connection with the third conduit (1310) forms a steam inlet (A3);
an end of the hollow cone (1210) in connection with the first cavity inlet (A5) forms a pressurized steam outlet (A4);
the cross-sectional area of the steam inlet (A3) is greater than that of the pressurized steam outlet (A4).

23. The coffee maker according to claim 22, **characterized in that**, the pressurized steam outlet (A4) has a cross-sectional area of less than 0.8 mm².

24. The coffee maker according to claim 11, **characterized in that**, the foaming and heating system (S3) includes a cup holder (3100) that can accommodate partial or a whole of the stirring cup (2400);
a third cavity (Q3) is formed between the cup holder (3100) and the stirring cup (2400) or between the cup holder (3100) and the substrate unit (2100), or the cup holder (3100) has a structure including the third cavity (Q3); and
the third cavity (Q3) is provided with a third cavity inlet (A7) or the third cavity (Q3) is provided with a third cavity inlet (A7) and a third cavity outlet (A8), and the third cavity inlet (A7) is connected with the first cavity outlet (A6).

25. The coffee maker according to claim 24, **characterized in that**, the third cavity inlet (A7) is connected with the first cavity outlet (A6) through a fifth conduit, and a third valve is provided on the first cavity outlet (A6) or the fifth conduit.

26. The coffee maker according to claim 24, **characterized in that**, the foaming and heating system (S3) includes a third sealing unit which is disposed at a position where the cup holder (3100) contacts with the stirring cup (2400) or the cup holder (3100) contacts with the substrate unit (2100).

27. The coffee maker according to claim 11, **characterized in that**, the foaming and heating system (S3) includes a cup holder (3100) that can accommodate all of the stirring cup (2400), and a third cavity (Q3) is formed between the cup holder (3100) and the substrate unit (2100); and
the substrate unit (2100) is provided with a liquid steam through hole, so that the steam or the hot water in the first cavity (Q1) enters the third cavity (Q3).

28. The coffee maker according to claim 11, **characterized in that**, the foaming and heating system (S3) includes a heating tube body (3200),
an end of the heating tube body (3200) is connected with the first cavity outlet (A6) or the third valve, or the substrate unit (2100) is provided with a second through hole, and the end of the heating tube body (3200) is in communication with the first cavity (Q1) through the second through hole; and
the heating tube body (3200) is closed or opened at an end away from the first cavity (Q1).

29. The coffee maker according to claim 27, **characterized in that**, an end of the heating tube body (3200) away from the first cavity (Q1) is annular.

30. The coffee maker according to any one of claims 24-29, **characterized in that**, the foaming and heating system (S3) includes a third temperature control component disposed in the second cavity (Q2) or in the third cavity (Q3); and the third temperature control component is in signal connection with the control system (S4).
